# EUROPEAN PATENT APPLICATION

(11) **EP 3 246 359 A1**
(43) Date of publication of application: **22.11.2017**
(21) Application number: 16460030.6
(22) Date of filing: 19.05.2016
(51) Int. Cl.: C08L 23/16

(54) **METHOD OF PRODUCING HALOGEN-FREE FLAME RETARDANT POLYMER COMPOSITES**

(71) Applicant: NANOSYNC SP Z O O, 62-002 Zlotniki, Suchy Las (PL)
(72) Inventor: Vallorani, Francesco, 64016 Sant'Egidio alla Vibrata (IT)
(74) Representative: Jankowski, Piotr

(57) **Abstract**

The subject matter of the invention is a method of producing halogen-free flame retardant polymer composites, used in the cable production and the production of profiles and injection moulds. The core of the invention is a two-stage method of producing halogen free flame retardant polymer composites, which involves mixing a base halogen free polymer composite with a nanoclay concentrate in a base halogen free polymer composite in desired proportion with the use of single-screw extruder. The first stage involves mixing two components: the base halogen free polymer composite and the nanoclay concentrate in the base halogen free polymer composite, and then the components are granulated; subsequently, the second stage involves mixing the base composite with the nanoclay concentrate in proportions guaranteeing that the polymer composite complies with non-flammability standards. The base halogen free polymer composite is prepared with the content of adhesion promoters-coupling agents, and low density polymers, which are characterised by a narrow molecular mass distribution curve, and then it is granulated. Both the base halogen free polymer composite and the nanoclay concentrate in the base halogen free polymer composite are prepared with the use of a twin-screw extruder.

## Description

Method of producing halogen-free flame retardant polymer composites.

The subject matter of the inventions is a method of producing halogen-free flame retardant polymer composites used in the cable production and the production of profiles and injection moulds used as components for vehicles, machines, structures, and tools.

At present, the development of polymer composites is especially connected with composing already existing polymers with nanofillers - typically of non-organic origin. A considerable amount of commercial polymer nanocomposites used worldwide has been produced with organically modified nanoclays. Development of materials in the nanoscale constitutes the core of the manufacture of many specialist products. Polymer nanocomposites are usually conventional polymers containing fillers of nano size (10⁻⁹m) at least in one dimension, which improve many physical and mechanical properties of materials that are required in new areas of application. For producing nanocomposites with nanoclays, polymers such as the following are used: polyamides, polyolefins, polystyrenes, polyurethanes, and polyethylene terephthalate. Most of the layered silicates, including montmorillonite (MMT), has hydrophilic nature that inhibits bonding with synthetic polymers, especially the nonpolar ones. In order to increase the compatibility of nanofillers with the polymer matrix, they are subjected to intercalation and exfoliation - processes that aims at increasing the distance between the filler layers and, as a result, facilitate the penetration of polymer chains between the layers. Relatively low silicate content (up to 10 wt%, but usually 3-5 wt%) in nanocomposites compared to the amount of additives used in traditional systems (30-90 wt%) allows easy processing of polymer-silica nanocomposites through extrusion, calendering or injection - similarly to the non-filled polymers. High content of traditional fillers often negatively affects the processing procedures.

Economically justified production of nanocomposite concentrates with high content of silicates requires the use of, e.g. corotating twin-screw extruders, dry blenders for components with high viscosity that require high shear forces for emulsification, reduction of particle size and homogenization - leading to the even and stable distribution of the nanofiller in the polymer matrix and, as a result, the highest possible degree of exfoliation. As for direct mixing, many factors play the role in achieving satisfactory results (e.g. extrusion speed, screw structure, material processing time). Total exfoliation of lamellar layers of the nanoclay concentrates usually requires other methods than direct mixing. In such a case, in situ intercalation polymerisation is used, which allows obtaining a better homogeneity of dispersion and the choice of catalysts often constitutes its key element.

Considering the above facts, disadvantages of using nanofillers include high costs, e.g. selection of catalysts, and, as a result, in situ polymerisation, chemical modifications to obtain better intercalation, limited availability - certain layered silicates are preferred, and difficulties in achieving a proper degree of dispersion in the polymer matrix due to the requirement of high shear forces, which often requires a change of machine facilities used in a particular industry branch, e.g. electrical cable production.

An important factor in the processing procedure is the rheology of nanocomposites in which an increase of material viscosity is generally observed (lower MFR value) caused by strong impact of nanofillers and polymer macromolecules. Higher viscosity may lead to controlled behaviours, such as smaller pores in the manufacture of foam products or lower tendency of material to form drops during fire tests of halogen-free materials, and lower propagation of flame. This determination is also used for cable groups with properties such as above.

The previous works have shown that scope and degree of modification of polymer matrix properties due to dispersing nanomolecules in it depends mainly on: the type and reactivity of functional groups on the surface of the modifier particle; strength and type of interactions on the polymer/nanoparticle phase boundary (especially the covalent or hydrogen bond between the macroparticle and the surface of the filler); filler content in the composite (usually up to several wt%, as a higher filler content results in nanoparticle agglomeration); sizes and shapes (effective shape factor) of the modifier that codetermine their specific surface area, and hence the strength of interaction with the organic matrix; the arrangement and degree of dispersion of nanoparticles in the polymer matrix structure.

A method of producing PVC with addition of cross-linking silane (as a halogen free additive that inhibits combustion) for cable production is known. Compositions based on mass fractions of cable materials are as follows: 100 fractions of polyvinyl chloride, from 10 to 100 fractions of plastificator, from 0.5 to 10 fractions of cross-linking silane, from 0.5 to 6 fractions of heat stabiliser, from 30 to 100 fractions of metal hydroxide, from 1 to 10 fractions of metallic compound inhibiting flammability, from 0.1 to 5 fractions of cross-linking agent, from 0.1 to 5 fractions of lubricant, from 0.1 to 0.5 fractions of antioxidant, from 0.05 to 0.1 fractions of dibutyltin dilaurate and proper amount of pigment. There is an improvement of mechanical properties of the material intended for cable production by 20-30 percent in comparison with noncross-linked PVC and its resistance increases 3-5 times in comparison with noncross-linked PVC.

The patent description US2009012213 provides data on polyethylene (PE), polyvinyl chloride (PVC), polypropylene (PP) or polyethylene terephthalate (PET) composites containing wood meal and silicon oxide nanopowder; they are characterised by lower water absorption and flammability, but better mechanical and processing properties in comparison with composites obtained without silicon oxide.

It is known that magnesium hydroxide or aluminium hydroxide are used as fillers combined with polymers in order to reduce their flammability. It has been achieved by modifying the surface of the filler, e.g. through the use of fatty acid salts as described in the German patent DE2659933 or the use of, for example, polymers with acid groups as described in the publication EPA292233. A basic requirement for these surface coating usually was high quality of filler material with specific property profile (patent DE2659933).

A method of producing non-toxic composition intended for cables in order to reduce their flammability is known and the composition consists of: 70-100 mass fractions of the ethylene-vinyl acetate copolymer; 10-30 mass fractions of the maleic anhydride resin; 130-200 mass fractions of aluminium hydroxide; 0.1-2 mass fractions of the first antioxidant; 0.5-1 mass fractions of 1,3-dihydro-4-methyl-2H-benzimidazole-2-thione, zinc salt, as the second antioxidant; 1-5 mass fractions of coupling agent; 1-3 mass fractions of silane; 0.05-3 mass fractions of catalyst; 0.5-3 mass fractions of lubricant; and 2-4 mass fractions of calcium oxide.

There are also literature publications known that are devoted to nanocomposites based on polyolefins; mainly on polypropylene (PP), which is due to the increasing importance of this material as a construction material. This polymer is hydrophobic, which inhibits its penetration between the MMT layers. One of the methods of producing the MMT/PP nanocomposites is the process proposed by Oy et. al., which consists of the following stages: 1) Mixing the ZMMT suspension in toluene with the toluene solution of 2,2'-azodiisobutyronitrile (AlBN), addition of toluene solution of n-(1,1-dimethyl-3-oxobutyl)acrylamide (DAAM), and mixing the resulting mixture for 30 min at the temperature of 30°C, which causes the DAAM particles to penetrate the interlayer spaces of MMT. 2) Polymerisation of DAAM in the nitrogen atmosphere at the temperature of 75°C within 1 hour. 3) Feeding PP modified in toluene with maleic acid into the composition, increasing temperature to 100°C and mixing for an hour. Subsequently the product is bathed in methanol and dried under vacuum conditions. Such modified PP was treated as a premix and was mixed with standard PP in the twin-screw extruder. The obtained nanocomposites are characterised by better bending and tensile strength, as well as higher elastic modulus; impact strength and heat resistance also increase.

A method of mixing PP and layered silicates in an alloy proposed by Reichert et. al. is known from literature. It involves preparing a premix of PP, modified silicate and stabiliser, which is subsequently processed in the twin extruder, adding 20 wt% of PP grafted with maleic anhydride (PPg-MA) during the process. Such obtained nanocomposites are characterised by increased tensile strength, higher elastic modulus at tension, and better impact strength.

The patent description PL212501B1 provides data on a method of producing a composite the first stage of which involves making a premix with nano-silica. For this purpose, a portion of polyethylene or propylene is mixed with nano-silica of specific particle size, converting the mixture into a plastified alloy and then subjecting it to the extrusion and granulation process; subsequently, a proper amount of such obtained premix granulate and base polyethylene or polypropylene is dosed simultaneously to the charging hopper of the extruder, adding possibly the copolymer of ethylene and n-octene grafted with glycidyl methacrylate, and then the mixture is extruded and, after water bathe, granulated. These composites of polyethylene and polypropylene with nanofiller powder contain 90-99.9 mass fractions of polyethylene or propylene, or the mixture of 90-99.5 mass fractions of polyethylene or polypropylene and 0.5-10 mass fractions of the copolymer of ethylene/n-octene grafted with glycidyl methacrylate, and 0.1-10 mass fractions of spherical nano-silica, also functionalised, with particle size ranging from 50 to 180 nm.

The patent description PL18070B1 provides data on a thermoplastic mixture of olefin or thermoplastic elastomer with the filler composition based on halogen free flame-retardant filler with modified surface. It contains from 5 to 90 wt% of the composition where halogen free flame-retardant filler has its surface modified by a) one or more fatty acid derivatives from the group consisting of polymer fatty acids, keto fatty acids, alkyl oxazolines, alkyl bis oxazolines, and possibly a derivative of siloxane, or b) fatty acid and a derivative of siloxane, with filler surface modifiers, especially liquid modifiers, containing possibly an addition of carrier material.

The subject matter of the invention is a method of producing halogen free flame retardant polymer composites, which is conducted in two stages and involves mixing a base halogen free polymer composite with a nanoclay concentrate in the base halogen free polymer composite in desired proportion. The polymer composite is bound with the nanoclay concentrate with process equipment characterised by low shear forces, such as single-screw extruders, injection moulders or calendering.

In the method according to the invention, the first stage involves mixing two molten components: the base halogen free polymer composite and the nanoclay concentrate in the base halogen free polymer composite, and then the components are granulated; the second stage involves mixing the base composite with the nanoclay concentrate in proportions guaranteeing that the polymer composite complies with fire resistance standards.

The base halogen free polymer composite is prepared with the content of adhesion promotors - coupling agents, and low density polymers, which are characterised by a narrow molecular mass distribution curve, and then it is granulated. Both the base halogen free polymer composite and the nanoclay concentrate in the base halogen free polymer composite is prepared with the use of a twin-screw extruder.

According to the invention, the nanoclay concentrate in the base halogen free polymer composite should be characterised by high viscosity.

Quantity and shape of filler particles also have a significant influence on the viscosity. Non-spherical particles, especially bars and plates, approach each other in a suspension to a larger extent than spherical particles with the same volume do. It especially pertains to suspensions of clay mineral particles. Additionally, in the case of particles with irregular shape, mechanical interactions may occur apart from the chemical ones. In such a case, friction between particles with irregular shape is higher or particles may mesh each other. It leads to the increase of viscosity. Therefore, the concentrate, or the polymer base to be more precise, requires a specific type of nanoclays. Platelets, such as MMT - montmorillonite, hydrotalcite or pipe-like structures such as halloysite are preferred. Preferred platelet arrangement in MMT should be characterised by linear dimensions between 100-500*10⁻⁹m and distances between platelets of at least 0.3*10⁻⁹m. The process for such arrangements may be safely conducted at the temperatures between 150°C and 230°C, but most preferably from 150°C to 180°C.

Additionally, the use of the following coupling agents:
1) polyolefin terpolymer containing such chemical groups as maleic anhydride or epoxide (glycidyl methacrylate);
2) amine derivatives of silane coupling agent;
3) polyethylene grafted with maleic anhydride; and
4) vinyl silane;
allows fast and effective process of adhesion of the nanofiller to the polymer matrix with high viscosity. Selective choice of various adhesion promoters is caused by the existence of more than one type of polymers in the polymer matrix of the concentrate. Not only does it aim at bonding the polymer blend with the nanofiller, but also the components of the blend itself - to be more accurate, it aims at shaping the supramolecular structure of the POE or TPO elastomers with other polymers. The above mentioned set of coupling substances also affects the process of complete exfoliation of the described nanoclay concentrate in the base halogen free polymer composite. Exfoliation aims at decomposition of larger granular aggregates into smaller ones and delamination, meaning separation of single layers that make up the granules.

Such prepared nanoclay concentrate in the base halogen free polymer composite can produce very high shear stress during treatment in a process that typically uses low shear forces, such as extrusion with the use of single-screw extruders. It allows obtaining complete exfoliation of the nanoclays in the base halogen free polymer composite, described in this application, with the use of typical, traditional and economical technologies and mixing machines used in the polymer processing, such as single-screw extruders, calenders, injection moulders, which, due to their unsatisfactory results of exfoliation and intercalation, are being substituted by machines using processes based on high shear forces or ultrasound.

The base halogen free polymer composite is hot prepared by mixing the following components in a twin-screw extruder at the temperature range of 150-180°C: from 5 to 20 wt% of polyolefin elastomers (POE or TPO), from 5 to 20 wt% of the ethylene-vinyl acetate copolymer (EVA), from 0 to 20 wt% of the copolymer of ethylene and vinyl acetate (EMA), from 0 to 20 wt% of ethylene-butyl acrylate copolymer, from 5 to 20 wt% of polyethylene (PE) and alfa-olefins, from 0 to 20 polypropylene (PP), from 0 to 20 wt% of ethylene propylene rubber (EPR), coupling agents - from 0 to 10 wt% of polyolefin terpolymer containing maleic anhydride or epoxide (glycidyl methacrylate), from 1 to 10 wt% of polyethylene grafted with maleic anhydride, from 0 to 2 wt% of amine derivative of silane coupling agent, from 0 to 2 wt% vinyl silane, from 40 to 65 wt% of non-organic fillers reducing combustibility, such as ATH/MDH, hydromagnesite / huntite, CaCO₃, MgCO₃, zinc borate, kaolin, talc, silica, the Apyrum filler. After the extrusion process, the composite is granulated.

Additional processing or dispersing additives are used, such as silicone wax, amides, esters, organic plasticiser of liquids - from 0.1 to 2 wt%; antioxidants: phenol and phosphite antioxidants, thioether, spatially complex Hindered Amine Light Stabilizers (HALS), UV absorbers, such as derivatives of benzotriazole, benzophenone, and triazine - from 0.1 to 1 wt%. Substances, such as DBTL and DOTL - from 0 to 1 wt% - which are the product of catalytic polycondensation of derivatives of sulphur acid and tin.

The POE (Poly(ethylene oxide) elastomers and low density polyethylenes - which are characterised by narrow molecular mass distribution curve, i.e. minimum differences in size and weight between monomers, and by low density ranging between 0.800 and 0.950 g/cm, most preferably between 0.850 and 0.915 g/cm, which results in their high viscosity - are of key importance for the base halogen free polymer composite.

The nanoclay concentrate in the base halogen free polymer composite is hot prepared in the molten state by mixing 40-65 wt% of the base halogen free polymer composite and the nanoclays in a twin-screw extruder at the temperature range of 150-180°C. Components are loaded one by one to a common charging hopper of the twin-screw extruder and then they are granulated.

Advantages of the solution introduced by the invention are: high viscosity of the halogen free polymer composite and low shear forces, which results in complete exfoliation and exceptionally stable dispersion of nanoclays in such obtained halogen free polymer composite; improved flame resistance of manufactured products; lower flame propagation; higher barrier properties; higher elastic modulus at tension and higher strength; complete exfoliation of the nanoclay concentrate in a process that is characterised by low shear forces; lower content of traditional fillers, which positively affects the processing procedures; reduction of composite production costs, eliminating the necessity of using catalysts in the in situ polymerisation and of chemical modifications for better intercalation; possibility of using typical equipment for cable production, i.e. single-screw extruders, which eliminates the necessity of replacing the equipment with more expensive twin-screw extruders to ensure proper dispersion and exfoliation of nanoclays.

The invention is presented more closely in embodiments.

The first embodiment reveals the composition and production method of the base halogen free polymer composite and the composition and production method of the nanoclay concentrate in the base halogen free polymer composite. Both are characterised by high viscosity and content of adhesion promoters and low density polymers, which are characterised by narrow molecular mass distribution curve.

The second embodiment reveals the composition and production method of halogen free flame retardant polymer composite.

The third embodiment reveals the method of applying cable jacket and compares the properties of the obtained cable jackets.

### Embodiment 1

The base halogen free polymer composite was hot prepared through mixing the following components in a corotating twin-screw extruder, with the screw outer diameter of D=90 mm and screw length of L=40xD, at the temperature of 160°C: 10 wt% of polyolefin elastomers (POE), 15 wt% of the ethylene-vinyl acetate copolymer (EVA), 7 wt% of polyethylene (PE) and alfa-olefin, coupling agent - 4 wt% of polyethylene grafted with maleic anhydride, 61 wt% of the ATH non-organic filler. Furthermore, processing and dispersing additives were used, such as silicone waxes, amides, esters, organic plasticisers of liquids - 2 wt%; antioxidants and light stabilisers - 1 wt%.

After the extrusion stage, the obtained composite was granulated.

A sample of the nanoclay in the base halogen free polymer composite was hot prepared through mixing the following components in a corotating twin-screw extruder, with the screw outer diameter of D=90 mm and screw length of L=40xD, at the temperature of 160°C: 50 wt% of MMT nanoclays, 50 wt% of the granulated base halogen free polymer composite, which was described above. After the extrusion stage, the obtained composite was granulated.

### Embodiment 2

A sample of the halogen free flame retardant polymer composite was made in the following way - 92 wt% of the base halogen free polymer composite granulate and 8 wt% of the nanoclay concentrate in the base halogen free polymer composite were mixed in a molten state, using a single-screw extruder with the screw outer diameter of D=90 mm and screw length of L=24xD at the temperature of 160°C, and then it was granulated.

### Embodiment 3

In order to produce two samples of a single-core low-voltage electric cable - copper / XLPE / outer jacket - a single-screw extruder with the screw outer diameter of D=90 mm and screw length of L=24xD was used at the temperature of 160°C.

When it comes to the first sample, the granulated base halogen free polymer composite from embodiment 1 (sample A) was loaded into the charging hopper of the extruder to make the cable outer jacket.

When it comes to the second sample, the granulated halogen free flame retardant polymer composite from embodiment 2 (sample B) was loaded into the charging hopper of the extruder to make the cable outer jacket.

Samples A and B were subjected to mechanical test and flame test for cable bundles in accordance with IEC 60332-3.

The results obtained:
Sample A
   Density = 1.517 g/cm³
   Tensile strength = 14.5 N/mm²
   Elongation at break = 184%
   Limiting oxygen index (LOI) = 37
   Compliance with IEC 60332-3 - No
Sample B
   Density = 1.509 g/cm³
   Tensile strength = 13.1 N/mm²
   Elongation at break = 196 %
   Limiting oxygen index (LOI) = 32.5
   Compliance with IEC 60332-3 - Yes

Limiting oxygen index determines the minimum oxygen quantity in the nitrogen atmosphere for a material to ignite. The higher limited oxygen index, the material is less flammable. If the oxygen index is higher than 26 (26% of oxygen), the material is considered self-extinguishing, which means it extinguishes when there is no longer any flame source.

Surprisingly, sample A was found not to comply with the requirements of IEC 60332-3, although its limiting oxygen index (LOI=37) was higher than that of sample B (LOI=32.5), which complies with the requirements of IEC 60332-3 for the flammability of cable bundles. At the same time, sample B showed an improvement of mechanical properties, as expected.

Such a behaviour arises out of the physical and mechanical properties of nanoclays and not the chemical properties of the substance exposed to flame. The higher limiting oxygen index is related to the chemical composition of the composite. However, the properties related to the reduction of flame propagation stem from agglomeration of mineral nanoplatelets that make up nanoclays, which, as a result, leads to the cutting-off of the composite material from oxygen and flame by the nanoclay layer that is impermeable to oxygen.

Apart from the indicated application of the halogen free flame retardant polymer composite in the cable production, the composite revealed in embodiment 2 may be used in every halogen free polymer matrix, reducing its flammability. In such a case, the polymer base must be composed of components with high viscosity characterised by narrow molecular mass distribution curve and low density, which guarantees that, in the process of single-screw extrusion or other process using low shear forces, high internal shear stress will occur and lead to complete exfoliation of nanoclays, e.g. WPC, TPU (thermoplastic polyurethane), polyesters, such as PET, PBT, biopolymers, polyamides, such as nylon, polycarbonate, ABS, TPE, and TPV.

## Claims

1. A method of producing halogen free flame retardant wherein the base halogen free polymer composite and the nanoclay concentrate in the base halogen free polymer composite is prepared by mixing the ethylene-vinyl acetate copolymer (EVA), the ATH non-organic filler, with addition of polymers **characterised by** narrow molecular mass distribution curve, low density and high viscosity - with the mass fraction amounting to 17%, and a coupling agent in the form of polyethylene grafted with maleic anhydride; the components are consecutively mixed with the MMT nanoclays - with the mass fraction amounting to 55%, after which the mixture is granulated, and then mixed with the concentrate in a single-screw extruder.

2. A method according to claim 1 wherein the polymer composite is prepared in a twin-screw extruder through mixing: 5-20 wt% of polyolefin elastomers (POE or TPO), 5-20 wt% of the ethylene-vinyl acetate copolymer (EVA), 0-20 wt% of the copolymer of ethylene and vinyl acetate (EMA), 0-20 wt% of ethylene-butyl acrylate copolymer, 5-20 wt% of polyethylene (PE) and alfa-olefins, 0-20 polypropylene (PP), 0-20 wt% of ethylene propylene rubber (EPR), coupling agents - 0-10 wt% of polyolefin terpolymer containing maleic anhydride or epoxide (glycidyl methacrylate), 1-10 wt% of polyethylene grafted with maleic anhydride, 0-2 wt% of amine derivative of silane coupling agent, 0-2 wt% of vinyl silane, 40-65 wt% of non-organic flame retardant fillers, such as ATH/MDH, hydromagnesite / huntite, CaCO₃, MgCO₃, zinc borate, kaolin, talc, silica, the Apyrum filler, and then the resulting composite is granulated.

3. A method according to claim 1 wherein the nanoclays in the concentrate amount to 40-65 wt%.

4. A method according to claim 1 wherein the mass fraction of the ethylene-vinyl acetate copolymer (EVA) amounts to 5-20%.

5. A method according to claim 1 wherein the mass fraction of the ATH non-organic filler amounts to 40-65%.

6. A method according to claim 1 wherein the process is carried out at the temperature range of 150°C-200°C.

7. A method according to claim 1 wherein the mass fraction of polymers - POE elastomers, polyolefins, polyethylene (PE) and alfa-olefins amounts to 10-20%.

8. A method according to claim 1 wherein the MMT nanoclays were used - montmorillonite with platelet linear dimension between 100 and 500*10⁻⁹m and distances between platelets of at least 0.3*10⁻⁹m.

9. A method according to claim 1 wherein nanoclays with the pipe-like structure were used.

10. A method according to claim 1 wherein polyolefin terpolymer - containing maleic anhydride or epoxide (glycidyl methacrylate), amine derivative of silane coupling agent, polyethylene grafted with maleic anhydride, and vinyl silane - is the coupling agent.

11. A method according to claim 1 wherein the mass fraction of the coupling agent in the form of polyethylene grafted with maleic anhydride amounts to 4%.

12. A method according to claim 1 wherein the base halogen free polymer composite is combined with the nanoclay concentrate directly at the stage of extruding a cable jacket or charging into injection moulds.

13. A method according to claim 2 wherein the POE elastomers and polyolefins are **characterised by** narrow molecular mass distribution curve and density of 0.800 - 0.950 g/cm³.
